# EUROPÄISCHE PATENTSCHRIFT

(11) **EP 0 468 006 B1**
(45) Veröffentlichungstag und Bekanntmachung des Hinweises auf die Patenterteilung: **03.05.1995**
(21) Anmeldenummer: 91902182.4
(22) Anmeldetag: 24.01.1991
(51) Int. Cl.: G01L 3/10

(54) **MESSVORRICHTUNG AN WELLEN ZUR BESTIMMUNG DES DREHMOMENTS UND/ODER DES DREHWINKELS**
MEASUREMENT DEVICE ON SHAFTS FOR DETERMINING THE TORQUE AND/OR ANGLE OF ROTATION
DISPOSITIF DE MESURE MONTE SUR DES ARBRES POUR DETERMINER LE COUPLE ET/OU L'ANGLE DE ROTATION

(30) Priorität: 15.02.1990 DE 4004589
(43) Veröffentlichungstag der Anmeldung: 29.01.1992
(73) Patentinhaber: ROBERT BOSCH GMBH, 70442 Stuttgart (DE)
(72) Erfinder: DOBLER, Klaus, D-7016 Gerlingen (DE); HACHTEL, Hansjörg, D-7251 Weissach (DE)
(86) Internationale Anmeldenummer: DE9100072
(87) Internationale Veröffentlichungsnummer: WO9112504

(56) Entgegenhaltungen:
- EP-A- 0 144 803
- DE-A- 2 939 620

## Beschreibung

### Stand der Technik

Die Erfindung geht aus von einer Meßeinrichtung nach der Gattung des Hauptanspruchs. Bei einer derartigen, aus der EP-PS 0 144 803 bekannten Meßvorrichtung ist die Torsionswelle als torsionsweiches Rohr ausgebildet. Dieses Rohr besteht aus zwei Teilen, die über einen verdrehbaren Paßsitz miteinander verbunden sind. Dabei ist aber die Justierung des berührungsfreien Meßsystems erst bei der Montage auf der Torsionswelle möglich. Bei Einbau bzw. beim Auswechseln der Torsionswelle muß somit äußerst genau die Winkellage des Meßsystems eingestellt werden. Ein Überlastschutz ist nicht vorhanden. Ferner wird dort ein Torsionsrohr mit Schlitzen erwähnt. Damit kann aber nur in einem einzigen Meßbereich gemessen werden.

### Vorteile der Erfindung

Die erfindungsgemäße Meßvorrichtung mit den kennzeichnenden Merkmalen des Hauptanspruchs hat demgegenüber den Vorteil, daß entweder, speziell bei kleineren Drehmomenten, nur mit dem Torsionsrohr ohne zusätzliche Torsionswelle gemessen werden kann und daß beim Verwenden von zusätzlichen Torsionswellen beim Wechseln der Torsionswellen eine Justierung des Meßsystems nicht mehr erforderlich ist. Durch einfache Ausgestaltung ist es mit Hilfe von Schlitzen oder Nasen möglich, einen Überlastschutz für die Torsionsrohre bzw. Torsionswelle vorzusehen. Ferner können mit einem einzigen Torsionsrohr bzw. einer zusätzlichen Torsionswelle mehrstufige Meßbereiche erfaßt werden. So ist es zum Beispiel möglich, im Anfangsbereich das Torsionsrohr besonders weich auszubilden und in einem späteren, höheren Drehmomentbereich das Torsionsrohr mit einer höheren Drehsteifigkeit zu versehen. Ein zusätzlicher Überlastschutz kann für in beide Drehrichtungen wirksam ausgebildet sein. Wird in die Hohlwelle zusätzlich eine weitere, als Vollwelle ausgebildete Torsionswelle eingebaut, so kann durch Wahl des Torsionsdurchmessers der Welle der gewünschte Meßbereich in weiten Grenzen eingestellt werden. Der Bereich kleiner Drehmomente kann mit Hilfe der Hohlwelle besonders genau erfaßt werden, während der Bereich hoher Drehmomente mit Hilfe der zusätzlichen Torsionswelle erfaßt wird. Bei der Hohlwelle schalten die Meßbereiche dabei selbsttätig um, so daß keine zusätzliche Maßnahme während der Messung notwendig ist. Auch die Ausbildung mit mehreren Meßbereichen und mit einem Überlastschutz ist in besonders einfacher Weise vorsehbar.

Durch die in den Unteransprüchen aufgeführten Maßnahmen sind vorteilhafte Weiterbildungen und Verbesserungen der im Hauptanspruch angegebenen Merkmale möglich.

### Zeichnung

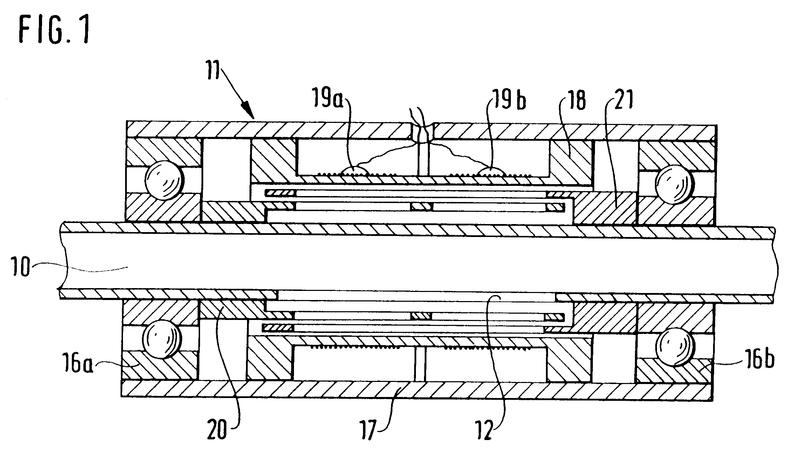

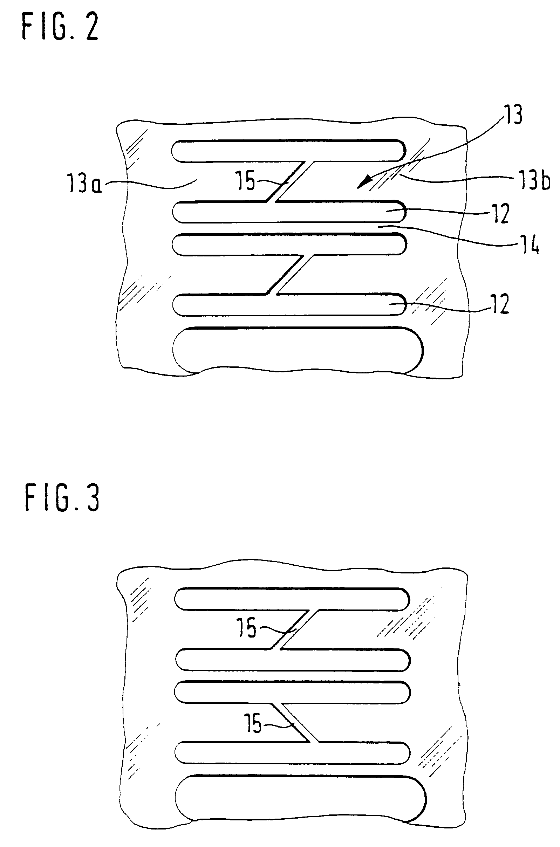

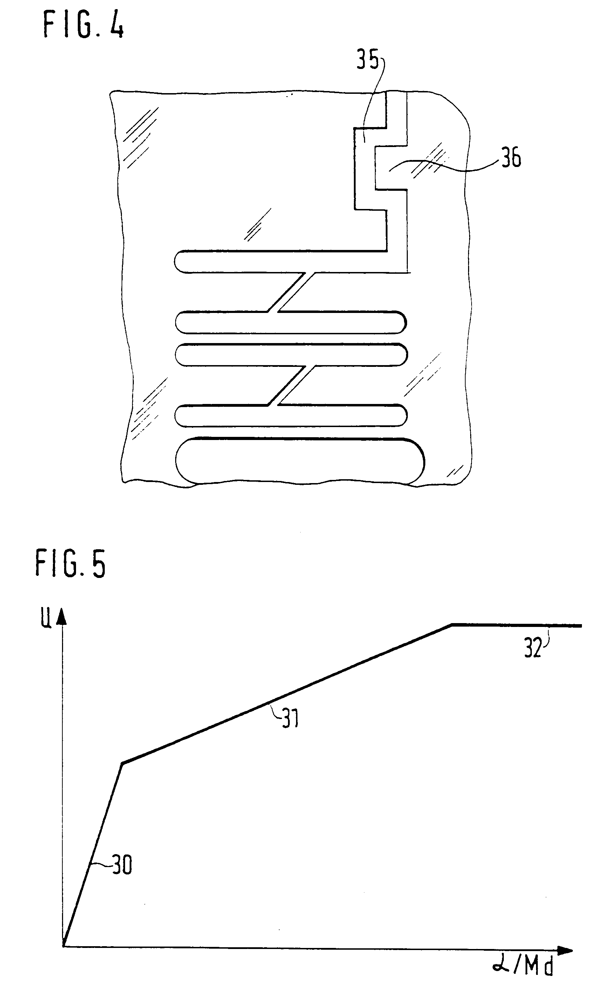

Ausführungsbeispiele der Erfindung sind in der Zeichnung dargestellt und in der nachfolgenden Beschreibung näher erläutert. Es zeigen Figur 1 einen Längsschnitt durch einen Drehmomentsensor, Figur 2 eine Abwicklung des Torsionsrohres, Figuren 3 und 4 jeweils eine Abwandlung des Torsionsrohres nach Figur 2 und Figur 5 einen Verlauf der Meßspannung U über dem Drehmoment Md bzw. dem Drehwinkel α bei einer Ausbildung des Torsionsrohres nach Figur 4.

### Beschreibung der Ausführungsbeispiele

In der Figur 1 ist mit 10 ein Torsionsrohr bezeichnet, das ein Drehmoment überträgt und hierdurch auch auf eine vorgegebene Längeneinheit bezogen, eine bestimmte Winkeldrehung relativ in sich erleidet, also tordiert wird. Zur Messung des Drehwinkels und daraus resultierend des übertragenen Drehmoments dient eine berührungsfreie Meßvorrichtung 11, die auf dem Torsionsrohr 10 befestigt ist und von diesem getragen wird. Wie aus der Figur 2 ersichtlich ist, weist das Torsionsrohr 10 in radialer Richtung mehrere Ausschnitte 12 auf. Die sich zwischen den Ausschnitten 12 befindenden Stege 13, 14 haben unterschiedliche Festigkeit bzw. Breite. So ist in der Figur 2 in radialer Richtung gesehen, jeweils ein breiter Steg 13 nach einem dünnen Steg 14 angeordnet. In den breiten Stegen 13 sind jeweils unter einem Winkel von ca. 45° zur Achsrichtung des Torsionsrohres 10 Schlitze 15 ausgebildet. Die Schlitze 15 befinden sich etwa in der Mitte der Länge der Stege 13.

Mit Hilfe zweier Lager 16a, 16b ist ein stationäres Gehäuse 17 auf dem Torsionsrohr 10 gelagert. Das Gehäuse 17 hat die Form eines zylindrischen Rohrstückes und ist mit den Außenringen der Lager 16a, 16b fest verbunden. Die Aufgabe des stationären Gehäuses 17 besteht darin, nach innen und in etwa mittig einen Spulenkörper 18 zu tragen, der mindestens eine, vorzugsweise zwei oder mehr Meßspulen 19a, 19b der Meßvorrichtung 11 aufnimmt.

Die folgenden Ausführungen beziehen sich auf eine Messung des Drehmoments unter Ausnutzung des sogenannten Wirbelstromprinzips. Die erfindungsgemäße Ausbildung des Torsionsrohres 10 kann aber auch bei einer Vielzahl sonstiger, für die Durchführung solcher Messungen geeigneter Meßsysteme verwendet werden. Hierbei ist es zum Beispiel notwendig, zwei relativ zueinander verdrehbare Körper in ihrer Wegänderung durch geeignete Mittel erfassen zu können. So ist beispielsweise die Anwendung des induktiven Prinzips problemlos möglich, da die Veränderung des Überdeckungsverhältnisses zweier Hülsenkörper direkt induktiv oder über Kopplung von Feldern erfaßt werden kann; sonstige Meßsysteme können beispielsweise kapazitive, optische, magnetostriktive Systeme sein oder die Relativverdrehung des Torsionsrohrs läßt sich auch mittels Dehnungsmeßstreifen und dergleichen erfassen. Bei dem in Figur 1 dargestellten Ausführungsbeispiel wird bevorzugt das Wirbelstromprinzip zur Messung verwendet, wobei die beiden relativ zueinander verdrehbaren Körper als eine innere Schlitzhülse 20 und als eine äußere Schlitzhülse 21 ausgebildet sind. Beide Schlitzhülsen 20, 21 sind mit einem verdickten, voneinander abgewandten möglichst nahe bei den Lagern 16a, b angeordneten Flansch fest und unverrückbar mit dem Torsionsrohr 10 verbunden. Es ergeben sich so zwei konzentrisch ineinandergreifende Körper, die über ihren Umfang und über ihre Längserstreckung verteilt über Schlitze, Fenster oder Ausnehmungen verfügen. Das Meßprinzip ist in der US-PS-4 356 732 ausführlich erläutert. Es ergeben sich je nach Drehwinkel unterschiedliche Wirbelstromeinflüsse auf die beiden Meßspulen 19a, 19b, deren Größe vom herrschenden Überdeckungsverhältnis der Schlitze der Schlitzhülsen 20, 21 abhängt. Da Wirbelströme die Impedanz der Meßspulen beeinflussen, verändern sich entsprechend dem relativen Drehwinkel auch die an den Meßspulen 19a, 19b abfallenden Spannungen.

Wird mit Hilfe des Torsionsrohres 10 ein Drehmoment übertragen, so bestimmen die schmaleren Stege 14 die Torsionsfestigkeit der Torsionswelle 10 bei niedrigen Drehmomenten. Der Schlitz 15 im Steg 13 ist dabei so ausgebildet, daß dieser Steg 13 bei kleinen Drehmomenten nicht zur Torsionssteifigkeit des Torsionsrohres 10 beiträgt, was bedeutet, daß die beiden Teile 13a, 13b des Stegs 13 sich nicht berühren. Ubersteigt das übertragene Drehmoment und damit der Torsionswinkel einen bestimmten Wert, so berühren sich die Teile 13a, 13b des Steges 13, so daß das Drehmoment jetzt zusätzlich von den Stegen 13 übertragen wird. Abhängig von der Ausbildung des Schlitzes 15 des Stegs 13 und von der geometrischen Gestaltung des Torsionsrohres 10 kann der Steg 13 als Überlastschutz oder als zweiter Meßbereich dienen. Da in der Figur 3 die Schlitze 15 in aufeinanderfolgenden Stegen 13 in entgegengesetzter Richtung ausgebildet sind, ist ein Überlastschutz oder zweiter Meßbereich in beiden Drehrichtungen der Torsionswelle 10 möglich.

In der Figur 2 wird, sobald sich die Teile 13a, 13b der Stege 13 berühren, somit selbsttätig auf einen anderen, zweiten Meßbereich umgeschaltet. Aufgrund der größeren Breite des Stegs 13 kann mit Hilfe dieses Stegs 13 ein höheres Drehmoment übertragen werden. In der Figur 5 ist das von der Meßeinrichtung 11 erzeugte Meßsignal U bezüglich des vom Steg 14 übertragenen Drehmoments als Kurvenabschnitt 30 bezeichnet. Sobald das Drehmoment vom Steg 13 übertragen wird, erhält man das Meßsignal U des Kurvenabschnittes 31. Die Ausbildung nach der Figur 2 arbeitet somit mit zwei Meßbereichen. Sind die Schlitze 15 aller Stege 13 gleich ausgebildet, so arbeitet das Torsionsrohr ohne Überlastschutz. Es kann aber auch einer der Stege und sein Schlitz als eine Art Überlastschutz dienen. Will man aber zusätzlich zu verschiedenen Meßbereichen auch noch einen Überlastschutz für das Torsionsrohr 10 vorsehen, so kann man nach dem Ausführungsbeispiel nach Figur 4 verfahren. Zusätzlich zu der Ausführung nach Figur 2 ragt in eine in das Torsionsrohr 10 ausgebildete Ausnehmung 35 eine Nase 36. Sobald die Nase 36, abhängig von der Drehrichtung des Torsionsrohres 10, an der Wand der Ausnehmung 35 anliegt, ist das maximal übertragbare Drehmoment erreicht. Das Torsionsrohr wird praktisch nicht mehr verformt und man erhält den in Figur 5 dargestellten, das heißt im idealen, theoretischen Fall waagerechten, mit einem gleichbleibenden Meßsignal U verlaufenden Kurvenabschnitt 32.

Je nachdem wie die Stege des Torsionsrohres 10 ausgebildet sind und welche Form die Schlitze in den Stegen haben, können verschiedene, gewünschte Meßbereiche erreicht werden. Durch zusätzlichen Einbau einer als Vollwelle ausgebildeten Torsionswelle in das Torsionsrohr 10 kann der gewünschte Meßbereich des Drehmomentsensors in noch weiteren Grenzen eingestellt werden. Besonders vorteilhaft ist dabei die in Figur 1 dargestellte Meßsignalerfassung mit Hilfe des Wirbelstromverfahrens. Dieses Meßverfahren ermöglicht die Erfassung bereits kleinster Drehwinkel und damit Drehmomente mit hoher Meßgenauigkeit und hoher Auflösung und ist ohne große Abwandlungen auch bei hohen Drehmomenten verwendbar.

Die in den Figuren dargestellten Ausführungsbeispiele sind besonders vorteilhafte, einfache Ausgestaltungen. Da durch Fräsen, Laserschneiden oder Erodieren auch relativ komplizierte Geometrien in der Torsionswelle kostengünstig realisiert werden können, sind dadurch, ohne großen Aufwand, die oben erwähnten Figuren in beliebiger Kombination möglich. Es sind dabei die verwendeten Geometrien entsprechend der gewünschten Meßbereiche bzw. des gewünschten Überlastschutzes herstellbar. Ferner ist es auch denkbar, zusätzliche Bauteile mit höherer oder niedrigerer Torsionsfestigkeit oder Festanschläge an einem Torsionsrohrbereich anzubringen.

## Patentansprüche

1. Meßvorrichtung zur Bestimmung des Drehmoments und/oder des Drehwinkels an stehenden oder rotierenden Wellen mit Hilfe eines Meßsystems (11) und mit einem torsionsweichen Rohr (10), das mehrere in Achsrichtung des Rohrs (10) verlaufende Äusschnitte (12) aufweist so daß im Rohr Stege zur Übertragung der zu bestimmenden Drehmomente vorhanden sind, dadurch gekennzeichnet, daß die Stege (13, 14) unterschiedliche Steifigkeit aufweisen und daß in den Stegen (13) mit höherer Steifigkeit Schlitze (15) ausgebildet sind, so daß die Stege (13) aus zwei Teilen (13a, 13b) bestehen und so daß die zwei Teile sich berühren können, wenn das übertragene Drehmoment einen bestimmten Wert übersteigt.

2. Meßvorrichtung nach Anspruch 1, dadurch gekennzeichnet, daß die Stege (13) mit höherer Steifigkeit als breitere Stege ausgebildet sind, und daß die Teile (13a, 13b) der breiteren Stege (13) bei Überschreiten eines definierten Verdrehwinkels durch die dünneren Stege (14) aneinanderliegen, so daß aufgrund der Steifigkeit der breiteren Stege (13) ein Überlastschutz des Rohrs (10) entsteht.

3. Meßvorrichtung nach Anspruch 1, dadurch gekennzeichnet, daß die Teile (13a, 13b) der breiteren Stege (13) bei Überschreiten eines definierten Verdrehwinkels durch die dünneren Stege (14) aneinanderliegen, so daß aufgrund der Steifigkeit der breiteren Stege (13) ein zusätzlicher Meßbereich des Rohrs (10) entsteht.

4. Meßvorrichtung nach einem der Ansprüche 1 bis 3, dadurch gekennzeichnet, daß die Schlitze (15) ungefähr unter einem Winkel von 45° zur Achsrichtung des Rohrs (10) ausgebildet sind.

5. Meßvorrichtung nach einem der Ansprüche 1 bis 4, dadurch gekennzeichnet, daß die Schlitze (15) aufeinanderfolgender breiter Stege (13) entgegengesetzte Richtung haben.

6. Meßvorrichtung nach einem der Ansprüche 1 bis 5, dadurch gekennzeichnet, daß eine Ausnehmung (35) im Rohr (10) vorhanden ist, in die eine Nase (36) hineinragt.

7. Meßvorrichtung nach einem der Ansprüche 1 bis 6, dadurch gekennzeichnet, daß im Inneren des Rohrs (10) eine zusätzliche, als Vollwelle ausgebildete Torsionswelle angeordnet ist, die eine zusätzliche mechanische Drehfestigkeit zum Rohr (10) addiert.

8. Meßvorrichtung nach einem der Ansprüche 1 bis 7, dadurch gekennzeichnet, daß am Rohr (10) zwei gegeneinander verdrehbare Körper (20, 21) mit ihren einen Endbereichen drehfest befestigt sind, daß sich zur Messung des Drehwinkels oder Drehmomentes die relative Überdeckungsfläche dieser beiden Körper (20, 21) mit dem Verdrehungswinkel ändert und die sich ändernde, relative Überdeckungsfläche der beiden Körper (20, 21) in mindestens einer der Meßspulen (19a, 19b) zu einem Meßsignal führt.

9. Meßvorrichtung nach Anspruch 8, dadurch gekennzeichnet, daß die Körper relativ zueinander verdrehbare, konzentrisch ineinander gelagerte innere und äußere Schlitzhülsen (20, 21) sind, die mit ihren entgegengesetzten Enden am Rohr (10) befestigt sind.

## Claims

1. Measuring device for determining the torque and/or angle of rotation on stationary or rotating shafts by means of a measuring system (11) and having a torsionally yielding tube (10) which has a plurality of cutouts (12) running in the axial direction of the tube (10), so that there are webs in the tube for transmitting the torques to be determined, characterized in that the webs (13, 14) have different rigidity, and in that slots (15) are formed in the webs (13) of higher rigidity so that the webs (13) consist of two parts (13a, 13b) and so that the two parts can touch one another if the transmitted torque exceeds a certain value.

2. Measuring device according to Claim 1, characterized in that the webs (13) of higher rigidity are designed as wider webs, and in that the parts (13a, 13b) of the wider webs (13) bear against one another if a defined angle of twist is exceeded by the thinner webs (14), so that overload protection of the tube (10) is obtained on account of the rigidity of the wider webs (13).

3. Measuring device according to Claim 1, characterized in that the parts (13a, 13b) of the wider webs (13) bear against one another if a defined angle of twist is exceeded by the thinner webs (14), so that an additional measuring range of the tube (10) is obtained on account of the rigidity of the wider webs (13).

4. Measuring device according to one of Claims 1 to 3, characterized in that the slots (15) are formed approximately at an angle of 45° to the axial direction of the tube (10).

5. Measuring device according to one of Claims 1 to 4, characterized in that the slots (15) of successive wide webs (13) point in opposite directions.

6. Measuring device according to one of Claims 1 to 5, characterized in that there is a recess (35) in the tube (10), into which recess (35) a nose (36) projects.

7. Measuring device according to one of Claims 1 to 6, characterized in that an additional torsion shaft designed as a solid shaft is arranged in the interior of the tube (10), which additional torsion shaft adds additional mechanical torsional strength to the tube (10).

8. Measuring device according to one of Claims 1 to 7, characterized in that two bodies (20, 21) which can be twisted relative to one another are fastened with one of their end regions to the tube (10) in such a way as to be fixed in terms of rotation, and in that, to measure the angle of rotation or the torque, the relative overlap area of these two bodies (20, 21) changes with the angle of twist, and the changing, relative overlap area of the two bodies (20, 21) results in a measuring signal in at least one of the measuring coils (19a, 19b).

9. Measuring device according to Claim 8, characterized in that the bodies are inner and outer slotted sleeves (20, 21) which can be twisted relative to one another, are mounted concentrically one inside the other and are fastened with their opposite ends to the tube (10).

## Revendications

1. Dispositif de mesure pour déterminer le couple et/ou l'angle de rotation d'arbres fixes ou rotatifs à l'aide d'un système de mesure (11) et d'un tube (10) souple en torsion, qui comporte plusieurs segments (12) dans la direction axiale du tube (10), le tube ayant des branches pour transmettre des couples à déterminer, caractérisé en ce que les branches (13, 14) ont une rigidité différente et dans les branches (13) de plus grande rigidité, ont des fentes (15) pour que les branches (13) se composent de deux parties (13a, 13b) et que les deux parties puissent se toucher lorsque le couple à transmettre dépasse une valeur déterminée.

2. Dispositif de mesure selon la revendication 1, caractérisé en ce que la branche (13) a une rigidité plus élevée que celle d'autres branches et les parties (13a, 13b) de cette branche (13), lors du dépassement d'un angle de rotation déterminé, se rejoignent par l'intermédiaire des branches étroites (14) si bien que la rigidité des branches larges (13) constitue une protection du tube (10) contre la surcharge.

3. Dispositif de mesure selon la revendication 1, caractérisé en ce que les parties (13a, 13b) des branches larges (13), lors du dépassement d'un angle de rotation déterminé, viennent se juxtaposer par les branches plus minces (14) si bien que la rigidité des branches larges (13) donne une plage de mesure supplémentaire au tube (10).

4. Dispositif de mesure selon une des revendications 1 à 3, caractérisé en ce que les fentes (15) font sensiblement un angle de 45° par rapport à la direction axiale du tube (10).

5. Dispositif de mesure selon l'une des revendications 1 à 4, caractérisé en ce que les fentes (15) de branches larges (13) successives sont orientées suivant des directions opposées.

6. Dispositif de mesure selon l'une des revendications 1 à 5, caractérisé par une cavité (35) dans le tube (10) dans laquelle pénètre un bec (36).

7. Dispositif de mesure selon l'une des revendications 1 à 6, caractérisé en ce qu'à l'intérieur du tube (10) il y a un arbre de torsion supplémentaire en forme d'arbre plein qui ajoute une rigidité à la torsion, mécanique supplémentaire au tube (10).

8. Dispositif de mesure selon l'une des revendications 1 à 7, caractérisé en ce que deux organes 20, 21 susceptibles de tourner l'un par rapport à l'autre sont fixés au tube (10), solidairement en rotation par leurs zones d'extrémité de façon que pour mesurer l'angle de rotation du couple, la surface de chevauchement de ces deux corps (20, 21) change avec l'angle de torsion et que la surface de recouvrement relative, variable des deux corps (20, 21) donne un signal de mesure dans au moins l'une des deux bobines (19a, 19b).

9. Dispositif de mesure selon la revendication 1 à 8, caractérisé en ce que les corps sont des douilles fendues (20, 21) intérieur et extérieur, tournant l'une par rapport à l'autre, engagées concentriquement l'une dans l'autre et dont les extrémités opposées sont fixées au tube (10).
